# FASCICULE DE BREVET EUROPEEN

(11) **EP 4 494 112 B1**
(45) Date de publication et mention de la délivrance du brevet: **21.01.2026**
(21) Numéro de dépôt: 24709392.5
(22) Date de dépôt: 07.03.2024
(51) Int. Cl.: G06V 20/52, G06V 10/94

(54) **PROCEDE MIS EN ?UVRE PAR ORDINATEUR POUR LA DETECTION AUTOMATIQUE D'OBJETS ABANDONNES**
COMPUTERIMPLEMENTIERTES VERFAHREN ZUR AUTOMATISCHEN ERKENNUNG AUFGELASSENER OBJEKTE
COMPUTER-IMPLEMENTED METHOD FOR AUTOMATICALLY DETECTING ABANDONED OBJECTS

(30) Priorité: 08.03.2023 FR 2302157
(43) Date de publication de la demande: 22.01.2025
(60) Demande divisionnaire: 25185137.4
(73) Titulaire: Alphaiota, 75009 Paris (FR)
(72) Inventeur: LEBOUCHER, Alexandre, 75014 Paris (FR); GUERIN, Vincent, 94100 Saint-Maur-des-Fosses (FR); BRUGIERE, Arnaud, 94300 Vincennes (FR)
(74) Mandataire: Oak & Fox
(86) Numéro de dépôt international: PCT/EP2024/055952
(87) Numéro de publication internationale: WO 2024/184439

(56) Documents cités:
- US-A1- 2010 128 930
- US-A1- 2021 027 068
- TRIPATHI RAJESH KUMAR ET AL: "Abandoned or removed object detection from visual surveillance: a review", MULTIMEDIA TOOLS AND APPLICATIONS, KLUWER ACADEMIC PUBLISHERS, BOSTON, US, vol. 78, no. 6, 14 August 2018 (2018-08-14), pages 7585 - 7620, XP036755939, ISSN: 1380-7501, [retrieved on 20180814], DOI: 10.1007/S11042-018-6472-9

## Description

### Domaine de l'invention

L'invention concerne le domaine des procédés de détection dans un flux d'images, d'objets qui ont été abandonnés par un humain. Le domaine de l'invention se rapporte plus particulièrement à la détection des déchets sauvages dans les zones propices aux dépôts sauvages.

### État de la technique

Il existe des solutions de vidéo surveillance pour la détection de colis abandonnés ou d'objets déposés sauvagement dans des zones dédiées à la collecte et au tri de déchets. De telles solutions existent également pour la détection d'objets abandonnés pouvant constituer une menace dans des lieux publics tels que des bagages, sacs, ou colis abandonnés dans des zones de passage de masse tels que des aéroports ou d'autres zones à forte densité de personnes tels que des squares ou autres zones publiques. Toutefois, ces solutions sont coûteuses en temps de calcul et en volume de données traitées du fait du flux d'images acquis à analyser. Par ailleurs, ces solutions sont confrontées à la problématique de conserver anonyme une partie des informations collectées y compris dans toute la phase de détection.

La demande CN107133974 publiée le 2017-06-02 divulgue un procédé permettant la détection de ce type d'objets pour caractériser des changements dans l'image et notamment détecter la présence de véhicule(s) en catégorisant le type de véhicule. Ce procédé met en œuvre des algorithmes d'apprentissage machine pour permettre de classifier au mieux la raison des présences des véhicules à proximité d'une route ou sur une route pour les rapprocher d'actes en particulier. La solution s'intéresse aux traitements de la reconnaissance du fond de l'image notamment pour traiter les différences de luminosité. Un premier problème est que les changements détectés n'exploitent pas la donnée de la durée de ce changement pour le qualifier comme une détection de dépôt de déchet(s). Un second inconvénient de la méthode est de traiter de grands volumes de données. En effet cette solution de l'art antérieur doit exécuter de nombreux traitements avant de détecter les portions de vidéos d'intérêts. Ces traitements sont coûteux et imposent des équipements électroniques locaux nécessitant de grands moyens de calculs.

La demande US11048942 publiée le 2018-05-08 traite directement de la problématique de la difficulté d'une classification des dépôts sauvages hétérogènes et des fausses détections. A cette fin ce document décrit une solution de détection de changements dans l'image et de détection d'activité. Un premier problème est que les changements détectés n'exploitent pas la donnée de la durée de ce changement pour le qualifier comme un dépôt de déchet(s). En outre, un second problème est que la solution impose également de grandes capacités locales de calculs et ne permet pas de détecter rapidement des changements tout en conservant un procédé de traitement assurant l'anonymat de certaines informations collectées dans l'image.

Le document US2021/027068A1 divulgue un procédé mis en oeuvre par ordinateur de détection de séquences vidéo d'intérêt d'une zone sous surveillance comportant l'acquisition d'un premier flux vidéo par au moins une caméra agencée pour capturer des images d'une zone d'intérêt; l'enregistrement du premier flux vidéo dans une mémoire, lesdits enregistrements correspondant à des vidéos enregistrées d'une durée prédéfinie; Une première extraction d'une première série d'images du premier flux vidéo définissant un second flux d'images acquis selon une première fréquence d'échantillonnage par un premier calculateur d'un premier équipement; la transmission du second flux d'images à un second calculateur; la détection d'un dépôt par la mise en oeuvre d'un premier algorithme de détection de changements dans les images appliqué au second flux d'image, ledit premier algorithme étant configuré pour déterminer une première position d'un nouvel élément dans ladite image, appelé premier élément, persistant pendant une durée minimale dans au moins une image du second flux d'image; la transmission d'une première donnée de détection relative à la présence d'un premier élément dans l'image du second flux d'images, d'un identifiant d'une première image associée à une première date, ladite première image comportant le premier élément détecté; une seconde extraction par un composant du premier équipement d'une seconde série d'images du premier flux vidéo acquis sur une première fenêtre temporelle comportant la première date, la seconde série d'images définissant un troisième flux vidéo; Transmission de la seconde série d'images; la détection d'une présence d'un être humain au sein d'au moins une image de la seconde série d'images par la mise en oeuvre d'une première fonction apprenante dans une zone prédéfinie autour de la première position de chaque image traitée de la seconde série d'images; la transmission d'une seconde donnée de détection relative à la présence d'un être humain dans au moins une image de la seconde série d'images, d'un identifiant d'une seconde image associée à une seconde date, ladite seconde image comportant une présence d'un être humain détectée; la transmission d'un extrait du premier flux vidéo, une seconde fenêtre temporelle correspondant à la durée de l'extrait comportant la première date
et la seconde date vers un second serveur distant, ladite première fenêtre temporelle comportant une portion du flux d'images précédent la première date.

Il existe un besoin pour proposer une solution qui soit peu coûteuse en temps de calcul et en volume de données traité tout en assurant un anonymat des données traitées lors de la détection d'un acte caractérisant un dépôt sauvage. Le même besoin d'une telle solution dans le cas d'abandons d'objets tels que des bagages dans des lieux publics existe également.

### Résumé de l'invention

Selon un premier aspect, l'invention concerne un procédé mis en œuvre par ordinateur de détection de séquences vidéo d'intérêt d'une zone sous surveillance selon la revendication 1.

Un avantage est de détecter des activités caractéristiques d'un dépôt sauvage de déchets tout en analysant qu'une faible portion de données, cela permet de mobiliser qu'une portion réduite des ressources locales. Cela permet notamment d'augmenter l'autonomie de l'équipement installé localement. Cet avantage s'applique également dans le domaine de la sécurité, où le procédé permet de détecter des objets abandonnés, tels que des bagages ou des colis, dans des espaces publics.

Selon un mode de réalisation, le dépôt correspond à un dépôt de déchets tels que des ordures ménagères, des gravats ou encore du mobilier, etc. Selon un mode de réalisation, le dépôt correspond à un dépôt d'un bagage dans un lieu public. Selon un mode de réalisation, le procédé de l'invention comprend une étape visant à reconnaitre automatiquement le type de dépôt, c'est-à-dire le type d'objet déposé. A cet effet, un algorithme d'apprentissage machine peut être utilisé afin de classifier le type de dépôt en fonction de la nature de l'objet qui est présent dans l'image. Cet algorithme peut être entrainé à partir d'un ensemble de données d'entrainement. Un réseau de type CNN, désignant dans la littérature anglosaxonne « convolutional neural network » et désignant un réseau de neurones convolutionnel peut être mis en œuvre.

Selon un mode de réalisation, le procédé comporte :
▪ Floutage d'au moins une portion de chaque image de la première série d'images par la mise en œuvre d'une fonction de floutage, ledit floutage étant réalisé par le second calculateur après la transmission du second flux d'images audit second calculateur ;
▪ Floutage d'au moins une portion d'image de chaque image de la seconde série d'images par la mise en œuvre d'une fonction de floutage, ledit floutage étant réalisé par le second ou le troisième calculateur après la transmission du second flux d'images audit second calculateur.

Un avantage est d'assurer un anonymat des informations transmises par la caméra qui effectue la capture d'images lors de la transmission des images émises vers une ressource d'un réseau de données.

Selon un mode de réalisation, le second calculateur est un calculateur d'un serveur distant, ledit serveur distant comportant une première fonction de floutage pour flouter automatiquement une seconde zone d'intérêt de chaque image reçue du flux d'images reçues, ladite première fonction logicielle comportant la mise en œuvre d'un modèle d'apprentissage machine configuré pour détecter et classifier les plaques d'immatriculation et les visages, ladite configuration comportant un modèle d'apprentissage machine appris à partir d'un ensemble de données d'entrainement, ladite première fonction logicielle comportant en outre un algorithme de floutage de ladite seconde zone d'intérêt détectée.

Un avantage est de détecter automatiquement les informations personnelles pour produire des images anonymisées.

Selon un mode de réalisation, la détection d'un dépôt comprend :
▪ Une détection d'un changement entre au moins deux images consécutives du second flux d'images, ledit changement caractérisant un premier élément présent dans l'image ;
▪ Une détection de la présence du premier élément au sein d'une pluralité d'images du second flux d'images, lesdites images étant considérées précédemment et/ou successivement à l'image au sein de laquelle un changement a été détecté ;
▪ Une extraction de la position dudit élément au sein de l'image.

Un avantage est de détecter d'un changement durable au sein d'un flux d'images.

Selon un mode de réalisation, la détection de la présence du premier élément au sein d'une pluralité d'images du second flux d'images est réalisé en effectuant une première moyenne de valeurs de pixels considérés dans chaque image d'un premier sous-ensemble d'images précédent l'image au sein de laquelle un changement a été détecté et en effectuant une seconde moyenne de valeurs de pixels considérés dans chaque image d'un second sous ensemble d'images succédant l'image au sein de laquelle un changement a été détecté, l'écart entre la première et la seconde moyenne permettant de déduire la présence d'un dépôt.

Un avantage est de localiser la position d'un changement dans l'image.

Selon un mode de réalisation, la détection d'un dépôt comprend au moins une comparaison de propriétés caractéristiques d'un groupement de pixels entre au moins deux images de la première série d'images.

Selon un mode de réalisation, lors d'une détection d'un premier élément, le premier calculateur comprend :
▪ Une génération d'une première donnée de détection relative à la présence d'un premier élément dans l'image,
▪ Une identification de la première image comportant le premier élément détecté dans l'image soit par un identifiant d'image, soit par une date décrite par un code temporel dans une fenêtre temporelle prédéfinie ;
▪ la génération d'au moins une première position dudit premier élément dans l'image.

Selon un mode de réalisation, la première date correspond à un code temporel d'une image dans le premier flux d'image, c'est-à-dire à celle d'une image échantillonnée à la première fréquence.

Un avantage est d'utiliser les métadonnées afin de rapidement extraire les images d'intérêt dans un flux vidéo.

Selon l'invention la seconde fréquence d'échantillonnage est strictement supérieure à la première fréquence d'échantillonnage, ladite première fenêtre temporelle comportant une portion du flux d'images précédent la première date.

Selon un mode de réalisation, la détection du dépôt comprend l'identification d'un intervalle temporel compris entre deux dates entre lesquelles le dépôt est détecté et en ce que la détection de la présence d'un être humain comprend l'identification d'un intervalle temporelle compris entre deux dates entre lesquelles la présence d'un être humain est détectée.

Selon un mode de réalisation, la première fenêtre temporelle de la seconde extraction est définie par les deux dates de l'intervalle temporelle identifié lors de la détection du dépôt.

Selon un mode de réalisation, la seconde fenêtre temporelle de la seconde extraction est définie par les deux dates de l'intervalle temporelle identifié lors de la détection du dépôt.

Selon un mode de réalisation, la détection d'une présence humaine comprend la détection d'une activité caractéristique d'un être humain.

Selon différents exemples, l'activité caractéristique comprend la détection d'une posture, d'un mouvement et/ou encore d'un ensemble formé par un être humain et un objet. Un algorithme d'apprentissage machine peut être utilisé afin de reconnaitre une forme, un mouvement ou une posture automatiquement. Un entrainement à partir d'un ensemble d'images labellisées peut être utilisé. Un réseau de neurones de type CNN peut être mis en œuvre à cet effet, dont l'acronyme désigne dans la littérature anglosaxonne « convolutional neural network » et désignant un réseau de neurones convolutionnel.

Selon un mode de réalisation, la détection d'une activité caractéristique comprend la mise en œuvre d'une première fonction apprenante réceptionnant en entrée des images du premier flux vidéo et mettant en œuvre un modèle d'apprentissage machine appris à partir d'un ensemble de données d'entrainement permettant de classifier des images d'un individu et classifier des mouvements desdits individus dans une portion donnée de chaque image traitée.

Selon un mode de réalisation, la seconde date correspond à une date d'une image échantillonnée et sélectionnée dans une seconde fenêtre temporelle correspondant à la période pendant laquelle une activité caractéristique a été détectée.

Selon un mode de réalisation, la seconde transmission comprend également la transmission d'au moins une première position dudit premier élément détecté dans l'image et en ce que la quatrième transmission comprend également la transmission d'au moins une seconde position de ladite activité détectée dans l'image identifiée.

Selon un mode de réalisation, la première transmission et la transmission sont réalisées vers le même calculateur, le second calculateur et le troisième calculateur étant dans ce cas les mêmes calculateurs.

Selon un autre aspect, l'invention concerne un équipement destiné à être fixé à un mat, ledit équipement comportant une caméra pour acquérir des images d'une zone d'intérêt et au moins un premier calculateur et une mémoire pour mettre en œuvre les étapes du procédé de l'invention.

Selon un autre aspect, l'invention concerne un système comportant un équipement comportant une caméra pour acquérir des images d'une zone d'intérêt et au moins un premier calculateur et une mémoire, ledit système comportant en outre un serveur distant pour mettre en œuvre les étapes du procédé de l'invention.

### Brève description des figures

D'autres caractéristiques et avantages de l'invention ressortiront à la lecture de la description détaillée qui suit, en référence aux figures annexées, qui illustrent :
Figure 1 : une représentation d'une zone dans laquelle un mode de réalisation du système est installé en haut d'un mat pour l'observation de ladite zone d'intérêt ;
Figure 2 : un exemple d'un système de l'invention comportant une pluralité d'équipements pour mettre en œuvre le procédé de l'invention ;
Figure 3 : un exemple de mise en œuvre d'étapes du procédé de l'invention comportant pour la détection d'un dépôt sauvage ;
Figure 4 : un exemple d'un équipement comportant une caméra et des moyens de calculs pour extraire des images à analyser ;
Figure 5 : un exemple de représentation des fenêtres temporelles et des dates de détection de dépôt de déchet(s) et d'une activité caractéristique d'une activité humaine,
Figure 6 : un exemple d'illustration des échanges de données entre les différents équipements du système de l'invention.

### Description de l'invention

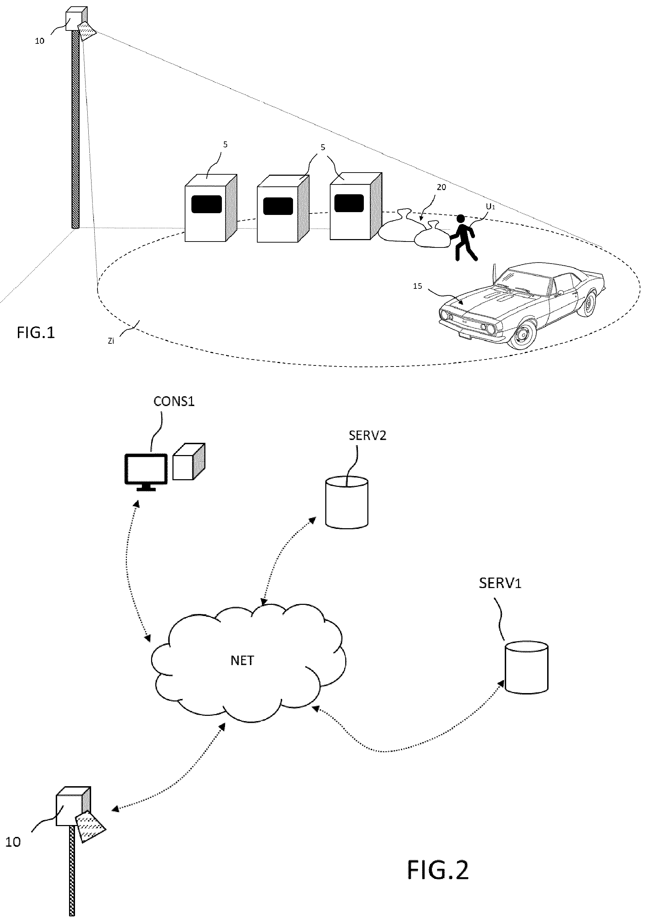

La figure 1 représente une scène dans laquelle sont présents des containers 5 pour accueillir des ordures ménagères, des verres ou des cartons. La scène représentée correspond à une zone d'intérêt Zᵢ dans laquelle on souhaite mettre en place une détection optique d'une activité de dépôts sauvages d'ordures ou d'objets par un individu U₁.

Le procédé et le système de l'invention se rapportent à toute zone d'intérêt présentant des containers ou non susceptible de faire l'objet d'une surveillance automatique du fait de dépôts sauvages. Ces zones peuvent correspondre à des emplacements de stockage, des déchèteries, des zones de dépôts, etc.

Le procédé et le système de l'invention peuvent dans un autre exemple se rapporter à un espace public susceptible de faire l'objet d'une surveillance automatique du fait de la possibilité d'abandons d'objets tels que des colis ou des bagages. Ainsi, l'invention porte à la fois sur les dépôts de déchets sauvages mais également les abandons d'objets tels que des bagages dans des zones d'intérêt.

La surveillance de cette zone d'intérêt Zi est opérée par au moins une caméra 10 installée en haut d'un mat. Selon différentes réalisations, différentes caméras peuvent être utilisées et installées soit de manière colocalisée en un point d'attache soit en différents points d'attache de la scène. Toute autre installation de la caméra ou des caméras sur un autre élément qu'un mat peut être réalisée. Typiquement, la caméra peut être installée en haut d'un toit ou d'une cheminée d'un bâtiment avoisinant, d'une installation électrique ou hydraulique ou encore d'un élément naturel tel qu'un arbre. La caméra est configurée pour couvrir selon un angle de vue une zone d'intérêt Zi que l'on souhaite surveiller. Lorsque différentes caméras sont installées en différents points d'installation, elles peuvent être configurées de sorte à couvrir une zone plus large ou à obtenir différents angles de vues d'une même scène.

La zone d'intérêt Zi représente ici un individu U₁ déposant un ou des dépôt(s) sauvage(s) 20 à côté des containers 5. Dans ce cas de figure, l'individu U₁ a garé sa voiture 15 à proximité. Lorsqu'il repart de la zone d'intérêt Zi, cette dernière scène a été modifiée d'un point de vue de l'image capturée par la caméra 10 puisqu'un nouvel objet 20 est présent dans l'image. Cet objet 20 persiste le plus souvent quelques heures, voire quelques jours au même endroit avant d'être retiré par un service de ramassage. Le changement opéré dans l'image est appelé un dépôt dans la mesure où à partir d'une date donnée, un nouvel objet 20 dans la scène va persister un certain temps dans les images acquises ultérieurement à son dépôt. L'invention permet notamment de détecter et classifier ce changement spécifique.

Lorsque l'individu U₁ arrive pour déposer un objet 20, différentes actions se succèdent : l'individu gare sa voiture 15, ouvre généralement le coffre du véhicule, extrait les objets 20 dont il souhaite se débarrasser, puis une phase de déplacement de ces objets 20 a lieu vers un endroit donné. Ensuite, l'individu U₁ repart vers sa voiture et prend le départ au volant de son véhicule 15 qui sort de la scène.

D'autres séquences d'actions peuvent avoir lieu dans le cas d'un dépôt sauvage. Par exemple, la voiture peut être un camion ou un autre véhicule, l'individu peut être accompagné d'autres individus. Les objets 20 transportés peuvent comprendre différentes tailles et être de différentes natures et enfin peuvent être plus ou moins volumineux et comprendre plus ou moins d'éléments. Il se peut que l'individu choisisse un autre endroit pour se garer et un autre endroit où déposer les objets.

L'ensemble des actions réalisées au moment du dépôt est appelé une activité caractéristique ACT₁ d'un être humain lors du dépôt sauvage d'un objet quelconque 20.

Dans un autre mode de réalisation, le dépôt est relatif à l'abandon d'un objet tel qu'un bagage ou un colis dans un lieu public.

Dans un premier mode de réalisation, l'activité caractéristique ACT₁ correspond simplement à la présence d'au moins un humain dans une zone donnée. La zone peut correspondre à l'ensemble de l'image ou à une portion de l'image.

Dans un mode de réalisation plus élaboré, l'activité caractéristique ACT₁ correspond non seulement à la présence d'un humain dans une zone donnée mais également à un motif supplémentaire tel qu'une posture, une forme et/ou un mouvement ou une combinaison de l'une de ces données.

La posture peut correspondre à une position du corps d'une personne qui est penchée par exemple, c'est-à-dire probablement en train de déposer un objet.

Le mouvement peut correspondre à un « aller et retour » d'une première position à une seconde position signifiant qu'un être humain se déplace par exemple d'une voiture à une zone de l'espace et revient à sa voiture. Un autre mouvement peut correspondre à un mouvement dans lequel un être humain se baisse et se relève.

La forme peut correspondre à un ensemble formé d'un corps et d'un objet porté par l'être humain. Cette forme peut être caractérisée par un échantillon de données d'entrainement représentant différentes formes correspondant à des êtres humains muni d'un objet. Ces différentes formes peuvent correspondre à des silhouettes d'êtres humains en train de porter des sacs, déchets, objets, etc.

Afin de reconnaitre une activité caractéristique, un algorithme d'apprentissage machine peut être mis en œuvre à partir d'un ensemble de données d'entrainement et par exemple d'un réseau de neurones tels qu'un CNN pour la détection de posture ou de forme, voire d'un RNN ou d'un CNN pour l'analyse d'un mouvement sur une pluralité d'images.

Dans la suite de la description, on parlera d'activité caractéristique ACT₁ pour caractériser à minima la présence d'un être humain et éventuellement selon un mode de réalisation on parlera d'activité caractéristique ACT₁ pour caractériser la présence d'un être humain et d'une donnée supplémentaire caractérisant une activité d'un être humain telle qu'une posture, un mouvement ou une forme complexe.

Selon un mode de réalisation, l'activité caractéristique peut caractériser la présence de deux ou trois êtres humains dans l'image et ne pas se limiter à la présence d'une unique personne.

Dans le cadre de l'invention, il peut être considéré que chaque phase d'un dépôt sauvage est elle-même une activité caractéristique ACT₁. L'invention permet notamment de détecter et classifier cette activité caractéristique. ACT₁. Dans la suite de la description, une activité caractéristique ACT₁ se rapportera soit à l'ensemble des phases, soit à l'une des phases en particulier, soit à une combinaison de phases.

La figure 2 représente un système de l'invention dans lequel un équipement 10 est installé en haut d'un mat. Cet équipement 10 peut être associé à un premier serveur SERV₁ qui réalise une partie des traitements du procédé de l'invention. Ce serveur SERV₁ peut être configuré pour recevoir des images émises de l'équipement 10. Un intérêt de cette configuration est de permettre de réaliser des opérations à distance de manière à alléger la charge de l'équipement 10 notamment pour favoriser son autonomie. L'équipement 10 peut être configuré par exemple pour acquérir des images et les enregistrer et réaliser quelques opérations visant à transmettre des images à distance et recevoir éventuellement des consignes visant à engager des actions automatiques comme l'émission de notification, l'émission de portion de vidéo, l'émission d'indicateurs ou d'images, etc. Dans cette configuration, l'équipement 10 consomme peu de ressources et peut être en fonctionnement autonome sur des durées plus longues.

Selon une alternative, l'équipement 10 réalise tous les traitements d'images réalisés sur les vidéos acquises pour exécuter le procédé de l'invention. Dans ce dernier cas, l'équipement 10 comprend des moyens tels que des cartes électroniques, puces, microprocesseurs, calculateurs, pour mettre en œuvre toutes les étapes du procédé. Cette configuration est intéressante lorsqu'une alimentation électrique est disponible sur le site de surveillance ou lorsque l'on souhaite éviter de faire transiter des informations via un réseau de données tel qu'internet ou lorsque ne l'on souhaite pas mettre en œuvre une opération de floutage et plus généralement d'anonymisation sur un flux vidéo transmis de l'équipement 10 vers un serveur distant SERV₁.

Selon une autre alternative, différents équipements sont installés sur site, dont l'équipement 10. Un intérêt est de répartir les charges de calculs, de segmenter les différentes fonctions réalisées, de faciliter les opérations de maintenance ou à accéder à des ressources électriques d'un réseau.

La figure 2 représente en outre, un second serveur SERV₂ raccordé au réseau de données NET de sorte que soit l'équipement 10, soit le premier serveur SERV₁ puisse adresser des données à ce serveur SERV₂.

Le procédé de l'invention vise à être exécuté par un ou plusieurs calculateurs centralisés ou distribués dans l'objectif d'extraire, le cas échéant, une portion d'une vidéo acquise comportant une détection d'un dépôt sauvage pour le transmettre à un second serveur SERV₂ distant. Ce second serveur SERV₂ peut être celui d'un système tiers assurant un service donné. A titre d'exemple, le tiers peut être un service départemental ou communal ou régional visant à exploiter ces vidéos pour sensibiliser une population, répertorier des types de dépôts sauvages, profiler les individus déposant sauvagement des objets, identifier des individus déposant sauvagement des objets ou encore dénombrer les dépôts sauvages afin de quantifier un effort, un investissement ou un coût pour une organisation. Selon un autre exemple, le tiers peut être un service tel celui de la police ou de la gendarmerie afin de générer automatiquement des contraventions.

Dans un autre mode de réalisation, le procédé de l'invention vise à extraire une portion d'une vidéo acquise comportant une détection d'un abandon d'objet tel qu'un bagage ou un colis dans un lieu public pour la transmettre à un second serveur SERV₂ distant pouvant être celui d'un système tiers assurant un service donné, tel que le service de sécurité du lieu public, le service de police ou de la gendarmerie.

La figure 2 illustre également une console d'exploitation notée CONS₁ permettant à un opérateur ou à un exploitant d'exploiter les portions de vidéos produites et transférées automatiquement par le procédé de l'invention.

Selon un mode de réalisation, le système de l'invention ne comprend ni la console d'exploitation CONS₁, ni le second serveur SERV₂.

Selon les variantes de réalisation, le système de l'invention comprend uniquement l'équipement 10. Selon une seconde variante de réalisation, le procédé de l'invention comprend l'équipement 10 et un serveur distant SERV₁. Selon un autre mode de réalisation, l'équipement 10 peut être remplacé par deux équipements sur le même site répartis entre un premier équipement d'acquisition d'image et un serveur local alimenté par une alimentation électrique disponible.

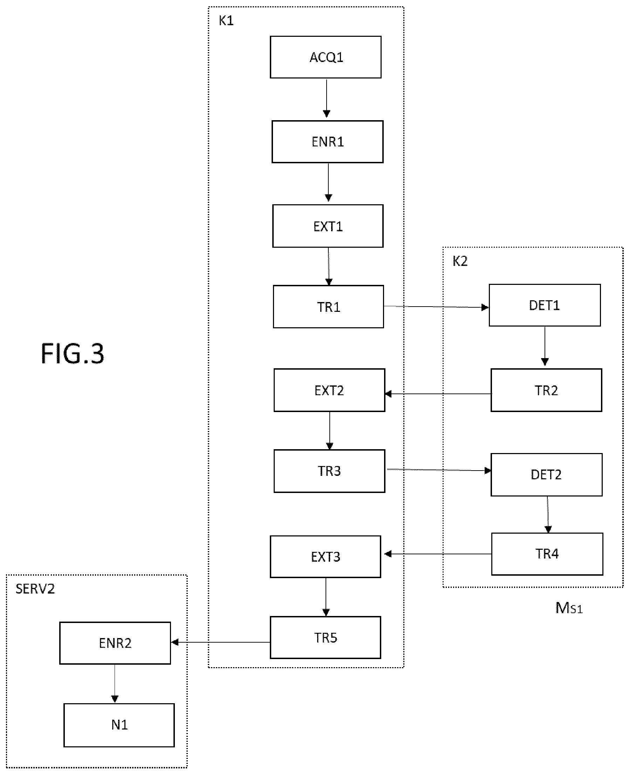

La figure 3 représente un diagramme d'étapes d'un mode de réalisation du procédé de l'invention. Ce diagramme représente les étapes réalisées par le premier calculateur K₁ du premier équipement 10, par le second calculateur K₂ qui peut être selon les cas de figure dans le premier équipement 10, dans un équipement secondaire comportant un calculateur dédié K₂ et positionné sur le site du premier équipement 10 ou au sein d'un serveur distant SERV₁.

La première étape ACQ₁ consiste en l'acquisition d'un flux d'images FL₁ provenant d'au moins une caméra C₁. Selon un mode de réalisation, le procédé peut prendre en compte deux flux d'images FL₁, FL₁' acquises par au moins deux caméras. Les images peuvent être des images 2 ou 3D selon le type de caméra utilisé. Lorsqu'une caméra comportant deux optiques est installée, une image 3D peut être acquise.

Les images acquises peuvent être des images obtenues à partir d'une caméra grand-angle ou une caméra avec une profondeur de champ donnée. Selon un mode de réalisation, deux caméras combinant des propriétés optiques différentes permettent d'enrichir le flux vidéo acquis. Selon un exemple de réalisation, un flux d'images infrarouge peut être ajouté au premier flux, ledit flux étant acquis au moyen d'une capteur infrarouge. Un intérêt est d'augmenter la capacité d'analyse des images de nuit ou ayant une faible luminosité.

Selon un mode de réalisation, la caméra C₁ peut comprendre un composant logiciel configuré pour détecter des changements dans l'image, tels que des passages de voitures, de piétons, des changements de luminosité, etc. Lorsqu'une telle caméra est utilisée, une première annotation des images du premier flux vidéo FL₁ peut être réalisée. Cette annotation peut ensuite être utilisée pour corroborer des labels de dépôts OB₁ détectés ou des activités caractéristiques ACT₁. Cette annotation peut être utilisée pour écarter des faux positifs.

Dans le cas où les dépôt OB₁ correspondent à des abandons d'objets tels que des bagages ou des colis dans les lieux publics, la caméra C₁ peut comprendre un composant logiciel configuré pour détecter un changement dans l'image tel que le passage d'un être humain.

Le procédé de l'invention comprend une étape qui vise à enregistrer les images acquises du flux vidéo FL₁. L'enregistrement peut être réalisé par exemple par portions de séquences vidéo sur des durées prédéfinies. Les enregistrements peuvent être indexés par date de sorte à identifier des segments de vidéo rapidement à partir de codes temporels d'une image détectée ultérieurement par le procédé.

Le procédé de l'invention comprend avantageusement une étape d'extraction d'une série d'images S₁ du premier flux FL₁ acquis.

Selon un premier mode de réalisation, la série d'images est extraite du flux vidéo FL₁ à chaque détection d'une activité caractéristique ACT₁ et/ou à chaque détection d'une présence humaine ACT₁ par la caméra.

Selon un autre mode de réalisation, qui peut être combiné à ce dernier, la série d'images S₁ est extraite à partir d'un échantillonnage à une fréquence fe₁ dudit premier flux FL₁. Un intérêt est d'extraire par exemple un flux d'une image par heure, ou une image par seconde ou une valeur intermédiaire de nombre d'image sur une durée donnée, par exemple de quelques minutes. Selon un exemple, une image par heure ou une image par minute peut être extraite du premier flux vidéo FL₁. Un intérêt est de générer une série d'images S₁ qui soit légère en poids et qui permette de mettre en œuvre un algorithme peu gourmand en ressources de calculs pour effectuer la détection d'un dépôt OB₁.

La série d'images extraite S₁ est alors éventuellement enregistrée localement au sein d'une mémoire de l'équipement 10. Le procédé de l'invention comprend une étape TR₁ de transmission de la première série d'images S₁ à un calculateur K₂ ou SERV₁ ou éventuellement K₁ en charge de procéder à la détection du dépôt OB₁. Lorsque les images sont transmises à un serveur SERV₁, des données de paramétrages sont utilisées pour émettre automatiquement la série d'images S₁ auprès du serveur. Les données de paramétrages peuvent comprendre une adresse d'un localisateur de ressource telle qu'une URL ou une adresse FTP ou toute autre adresse permettant d'accéder à une ressource connectée à un réseau de données NET, tel qu'internet. En outre, les données de paramétrages peuvent comprendre des données d'authentification d'un service comportant un identifiant et un mot de passe ou d'autres données permettant d'assurer une authentification sécurisée auprès d'une ressource distante. Un troisième serveur (non représenté) peut être mis en œuvre pour assurer le service d'authentification et accorder les droits d'accéder à une ressource du serveur SERV₁, et éventuellement SERV₂.

A cet effet, une interface de communication INTc peut être configurée pour encoder les images de la première série d'images S₁ et transmettre les données à un équipement réseau tel qu'un commutateur ou un routeur permettant d'émettre les données sur le réseau de données NET. Selon un mode de réalisation, l'interface de communication INTc peut comprendre des moyens pour émettre directement des trames de données sur le réseau par exemple via un réseau 4G.

Selon un autre mode de réalisation, l'interface INTc est configurée pour émettre les données via un canal de communication sans fil vers un autre équipement (non représenté) situé sur le même site qui comprend des moyens d'analyse, tel qu'un serveur. Un intérêt est d'utiliser des ressources d'alimentation électrique du second équipement pour mettre en œuvre des algorithmes de détection de dépôts OB₁ et/ou de détection d'activité caractéristique ACT₁, notamment lorsque le premier équipement 10 fonctionne sur batterie. Dans un mode de réalisation, le premier équipement 10 est raccordé à un système d'alimentation électrique.

Le procédé de l'invention comprend en outre une étape de détection DET₁ des dépôts OB₁. Cette étape peut être réalisée selon les configurations par toute ressource matérielle permettant de réaliser des calculs notamment pour réaliser des analyses d'images.

L'étape de détection DET₁ des dépôts comprend avantageusement un algorithme visant à comparer les images de la seconde série S₁ entre elles. Une méthode d'analyse des nouveaux dépôts entre les différentes images de la première série S₁ peut être mise en œuvre. Selon un exemple de réalisation, des propriétés de pixels sont analysées pour être comparées. Ces propriétés peuvent comprendre toute propriété caractéristique de pixels telles que leur couleur, leur intensité, leur niveau de gris, leur luminosité, leur saturation, leur teinte, etc. Selon un exemple, des propriétés relatives à des groupes de pixels d'une même portion d'une image peuvent être comparées entre deux images successives de la série d'images ou entre des images espacées de plusieurs images dans la série d'images. Les propriétés d'un groupe de pixels rassemblés dans une même zone peuvent comprendre des propriétés obtenues en réalisant toute opération mathématique telle que des moyennes, des médianes, des calculs de distribution de certaines propriétés ou autre opération mathématique. Dans ce dernier cas, les comparaisons sont relatives à des moyennes, médianes ou des propriétés de distributions de certaines propriétés dans le groupement de pixels.

Cette analyse permet de détecter un nouvel élément 20 dans l'image. Cette analyse comprend une étape de comparaison d'images entre elles de la première série d'images S₁, par exemple en les soustrayant pour produire une image différentielle. Selon un exemple, une étape d'élimination des basses fréquences dans le domaine des fréquences de l'image différentielle est réalisée de sorte à isoler les changements singuliers dans une zone de l'image. Cette étape permet notamment de s'affranchir des changements homogènes entre deux images liées par exemple à une baisse de luminosité. Les changements sont identifiés dans l'image différentielle pour détecter un changement dans l'image. Selon un mode de réalisation, un algorithme de détection des arêtes et des coins permet de déterminer la forme du nouvel objet détecté dans l'image afin de caractériser des propriétés du changement. Cette caractérisation des propriétés du nouvel objet et donc du changement permet de classifier le type de changement détecté.

Enfin, une analyse de la qualification du changement dans le temps est réalisée de sorte à labelliser les dépôts OB₁. Cette étape vise à détecter un changement durable sur un sous-ensemble d'images du premier ensemble d'images S₁. Afin de réaliser cette étape, une pluralité d'images consécutives à la détection est considérée pour mesurer si le changement est toujours présent dans le temps. Cette étape permet notamment d'écarter tous les changements rapides liés à des passages furtifs de véhicules ou d'individus ou tout autre changement qui ne sont pas durables au sein de la première série d'images S₁.

Lorsqu'un dépôt OB₁ est détecté, une donnée de marquage est générée de manière à identifier l'image IM₁ et la date t₁ associée à cette image de la première série d'images S₁. Selon un exemple de réalisation, des données caractérisant la forme de l'objet et/ou la région de l'image IM₁ dans laquelle le changement a été opéré peuvent être générées.

Selon un mode de réalisation, une fonction apprenante, appelée seconde fonction apprenante FA₂ peut être mise en oeuvre par le procédé de l'invention, par exemple en combinaison avec la mise en œuvre d'un algorithme précédemment décrit. A cet effet, un modèle d'apprentissage machine comportant un paramétrage tel qu'une série de coefficients peut être appris au moyen d'une descente de gradients pour entrainer un modèle de régression. Un intérêt est de valider les dépôts dans l'image OB₁.

Selon un exemple, des séquences d'images avec des passages de véhicules non caractéristiques d'un dépôt sont classées comme des activités ne relevant pas d'un dépôt. Selon un autre exemple, un changement de luminosité d'une séquence d'images sont classées comme des activités ne relevant pas d'un dépôt. A contrario, des séquences comportant un objet à partir d'une image de la séquence près d'une zone d'intérêt et qui reste pendant un laps de temps donné peut être associé à une détection de dépôt OB₁.

Le procédé de l'invention comprend alors une étape visant à émettre une notification TR₂ au premier équipement 10 permettant de réaliser une seconde extraction d'images S₂ dans une fenêtre temporelle D₁ prédéfinie. La notification comprend avantageusement des données permettant de caractériser les images d'intérêt, des codes temporels, éventuellement des identifiants d'images, des zones géométriques de l'image délimitant un contour lié au changement détecté ou encore une région d'intérêt de l'image IM₁ et des paramètres d'authentification de service permettant de sécuriser les transmissions entre les équipements.

Selon un exemple de réalisation, les positions dans l'image des dépôts OB₁ ne sont pas transmises au premier calculateur K₁. Dans ce cas, les positions dans l'image et éventuellement les zones géographiques ou les groupements de pixels associés aux dépôts OB₁ sont enregistrés dans une mémoire de l'équipement comportant le calculateur K₂ ou dans une mémoire du premier serveur SERV₁. Un avantage est d'alléger les transferts de données entre les différents équipements du système. Un intérêt est de réexploiter ces données de positions ou de zones dans la détection de l'activité caractéristique ACT₁ réalisée dans un second temps à partir de la seconde série d'images S₂.

La seconde série d'images S₂ peut être également considérée comme un flux vidéo, appelé troisième flux vidéo FL₃. On comprend que le troisième flux vidéo a une fréquence d'échantillonnage des images du premier flux vidéo FL₁ plus grande que la fréquence d'échantillonnage des images du premier flux vidéo FL₁ ayant généré le second flux vidéo FL₂. Les fenêtres temporelles des flux vidéo FL₂ et FL₃ transmises peuvent être identiques ou légèrement différentes du fait qu'on cherche à élargir la fenêtre d'analyse pour identifier automatiquement l'activité caractéristique au sein du troisième flux vidéo.

Selon un exemple, une pluralité de premières extractions EXT₁ et de détections DET₁ sont réalisées successivement en affinant un échantillonnage sur des périodes temporelles de plus en plus fine autour d'une date d'intérêt lié au changement spécifique d'un dépôt OB₁. Dans ce cas, à la Nième détection DET₁, la seconde extraction EXT₂ est engagée.

Le premier équipement 10 met en œuvre une nouvelle étape d'extraction EXT₂ permettant d'extraire une seconde série d'images S₂. La seconde série d'images S₂ comprend avantageusement un échantillonnage plus fin, c'est-à-dire avec une fréquence plus élevée que le premier échantillonnage fe₁ afin d'extraire sur la première fenêtre temporelle D₁ un plus grand nombre d'images afin d'opérer une seconde détection DET₂ d'une activité caractéristique d'une activité humaine ACT₁ au voisinage temporel de la première détection DET₁. Un intérêt est de vérifier que le dépôt OB₁ est associé à un dépôt d'un objet par un humain.

Selon un exemple, le procédé de l'invention corrèle :
- la détection d'un dépôt OB₁ détecté avec
- une seconde détection DET₂ d'une activité caractéristique d'une activité humaine ACT₁

Ainsi une telle opération permet de ne pas générer d'étapes supplémentaires du procédé et permet d'alléger les calculs du ou des calculateurs K₁ du premier équipement 10. En outre, cela permet de renforcer la robustesse du procédé en combinant la génération de plusieurs données provenant de différents équipements ou composants pour affiner les critères de détection.

A cet effet, le procédé de l'invention comprend une troisième transmission TR₃ visant à émettre la seconde série d'images S₂ vers un calculateur en charge de cette détection d'activité ACT₁. Différentes réalisations du procédé de l'invention peuvent être mises en œuvre. La seconde série d'images S₂ peut être traitée localement par le calculateur K₁ ou par un autre équipement sur site au sein d'un second calculateur K₂ ou par un serveur distant SERV₂.

La seconde série d'images S₂ permet d'engager un second traitement visant à détecter une activité caractéristique ACT₁ au voisinage de la date t₁ correspondant à la première détection d'un dépôt OB₁.

La détection d'une activité caractéristique ACT₁ peut être mise en œuvre au moyen d'une première fonction apprenante FA₁ mettant en œuvre un modèle d'apprentissage machine. Selon un exemple, un réseau de neurones de type CNN, désignant « convolutional neural network » dans la terminologie anglo-saxonne peut être utilisé. Selon un autre exemple un réseau de neurones de type RNN, désignant « recurrent neural network » dans la terminologie anglo-saxonne peut être mise en œuvre. De nombreux autres modèles apprenants peuvent être mis en œuvre notamment ceux adaptés au traitement des images. A cet effet, un modèle d'apprentissage machine comportant un paramétrage tel qu'une série de coefficients peut être appris au moyen d'une descente de gradients pour entrainer un modèle de régression. Cette première fonction apprenante FA₁ permet notamment de paramétrer un classifieur afin de classifier les différentes activités caractéristiques détectées. Un intérêt est de détecter les activités caractéristiques ACT₁ d'un dépôt d'un objet par un humain dans la zone correspondant à la détection d'un dépôt OB₁.

A cet effet, un apprentissage permet de labéliser des activités non caractéristiques d'un dépôt sauvage et de labéliser des activités caractéristiques d'un dépôt sauvage. Selon un exemple, des séquences d'approches en voiture sans descente d'un individu de la voiture peuvent être classées comme non caractéristique d'un dépôt sauvage. Selon un autre exemple, un ramassage d'un dépôt sauvage peut être également labélisé comme non caractéristique d'un dépôt sauvage. A contrario, des séquences d'approche d'un individu sortant d'un véhicule avec un objet près d'une zone d'intérêt peuvent correspondre à un label d'une activité caractéristique ACT₁.

Lorsqu'une activité caractéristique ACT₁ est identifiée par la première fonction apprenante FA₁, un ensemble de données sont générées pour être transmises au premier calculateur K₁ ou au premier équipement 10. Les données comprennent au moins un identifiant d'image IM₂ dans laquelle est identifiée une activité caractéristique ACT₁ et éventuellement un code temporel ou une date t₂ dans la seconde série d'images S₂. Selon un exemple, au moins une zone géométrique de l'image délimitant un contour lié à l'activité caractéristique ou encore une région d'intérêt de l'image IM₂ peut être transmise au premier équipement 10.

Selon un exemple, des paramètres d'authentification de service enregistrés dans une mémoire sont automatiquement générés pour sécuriser les transmissions entre les équipements, par exemple entre le serveur SERV₁ et l'équipement 10.

Le procédé de l'invention comprend la définition d'une seconde fenêtre temporelle D₂. Cette étape peut être réalisée avantageusement par le calculateur K₁ de l'équipement 10. La seconde fenêtre temporelle D₂ comprend avantageusement une période comportant les deux dates t₁ et t₂ de sorte à extraire une portion du premier flux vidéo F₁ comportant une séquence correspondant à la détection de l'activité caractéristique ACT₁ et une portion d'une séquence correspondant à un dépôt OB₁. La portion vidéo extraite du premier flux vidéo FL₁ peut avoir une durée allant de quelques secondes à quelques minutes.

L'étape d'extraction de la portion de vidéo est notée EXT₃ sur la figure 3. L'extraction peut comprendre notamment la lecture d'une portion d'intérêt du premier flux vidéo FL₁ qui est enregistré dans une mémoire du premier équipement 10 et un enregistrement de la portion extraite sur une autre mémoire destinée à collecter et sauvegarder toutes les portions extraites d'intérêt dans lesquelles des détections ont été annotées. Selon un premier cas d'exemple, la portion extraite est extraite avec un échantillonnage Fe₁ d'origine du premier flux vidéo FL₁, selon un second exemple, un troisième échantillonnage Fe₃ est réalisé de sorte à extraite une portion avec moins d'images de sorte à favoriser la création d'un fichier de taille réduite. Selon un exemple, la vidéo extraite est compressée selon un algorithme de compression d'image.

Le procédé de l'invention comprend une nouvelle étape de transmission TR₅ de la portion vidéo extraite. La transmission de cet extrait est préférentiellement réalisée vers un autre serveur SERV₂. Pour être exploitée par un service d'analyse d'images.

Le second serveur SERV₂ comprend une étape visant à enregistrer la portion vidéo extraite. Cette étape peut être incluse au procédé de l'invention ou peut être réalisée par un autre procédé. En d'autres termes, cette étape est optionnelle et peut ne pas être considérée comme faisant partie de l'invention.

Le second serveur SERV₂ comprend l'exécution d'une nouvelle étape notée N₁ qui consiste en l'émission d'une notification N₁ comportant la transmission des données caractéristiques de la détection, telle qu'une qualification du dépôt sauvage, l'heure et la date du dépôt sauvage, un identifiant de la zone d'intérêt et l'identification d'une plaque d'immatriculation.

La détection de la plaque d'immatriculation peut être réalisée par le second serveur SERV₂ notamment par la mise en œuvre d'un algorithme de détection de détection de la plaque d'immatriculation et un algorithme visant à interpréter le numéro de la plaque d'immatriculation.

Un tel algorithme peut notamment comprendre la mise en œuvre d'une troisième fonction apprenante FA₃ permettant de détecter une voiture et une zone d'intérêt correspondant à la zone généralement réservée sur la voiture pour apposer une plaque d'immatriculation, c'est-à-dire sur à l'arrière de la voiture et/ ou à l'avant de la voiture ou d'une remorque le cas échéant et placée au-dessus du pare choc de cette dernière.

A cet effet, la détection d'une plaque d'immatriculation peut être mise en œuvre au moyen d'une troisième fonction apprenante FA₃ mettant en œuvre un modèle d'apprentissage machine. Selon un exemple, un réseau de neurones de type CNN, désignant « convolutional neural network » dans la terminologie anglo-saxonne peut être utilisé. Selon un autre exemple un réseau de neurones de type RNN, désignant « recurrent neural network » dans la terminologie anglo-saxonne peut être mise en œuvre. De nombreux autres modèles apprenants peuvent être mis en œuvre notamment ceux adaptés au traitement des images. A cet effet, un modèle d'apprentissage machine comportant un paramétrage tel qu'une série de coefficients d'une fonction ou des poids d'une matrice ou tout autre paramétrage d'une fonction apprenante, peut être appris au moyen d'une descente de gradients pour entrainer un modèle de régression. Cette troisième fonction apprenante FA₃ permet notamment de paramétrer un classifier afin de classifier les images de plaque d'immatriculation. Un intérêt est d'isoler l'image d'intérêt et d'extraire l'image de la plaque d'immatriculation de la voiture.

Selon un exemple de réalisation, une étape visant à corréler la détection du véhicule dont on souhaite obtenir la plaque d'immatriculation avec la détection de l'activité caractéristique ACT₁. Cette étape permet de lever des ambiguïtés sur l'image du véhicule exploitée lorsque plusieurs véhicules sont présents dans la scène. L'image comportant l'identification d'un individu d'un véhicule au moment de la détection de l'activité caractéristique peut être avantageusement exploitée à cet effet.

Un second algorithme visant à extraire le numéro de plaque peut comprendre notamment un algorithme de reconnaissance de caractères d'une portion d'image. Ainsi, le numéro de la plaque peut être obtenu. Selon un exemple de réalisation, un algorithme de transformation de l'image peut être appliqué de manière à générer une image de la plaque dans un référentiel non déformé. La déformation peut être liée à l'angle de vue de la caméra ainsi, les paramètres de transformations peuvent être automatiquement générés en fonction de la position de la voiture dans la scène, c'est-à-dire dans l'image acquise et selon l'orientation de cette dernière dans l'image.

Selon un mode de réalisation, l'algorithme visant à extraire le numéro de la plaque d'immatriculation peut être réalisé par le premier équipement 10 par exemple par le premier calculateur K₁ ou encore par un autre calculateur du même équipement. Selon un exemple, un second équipement sur le site de la zone d'intérêt qui est appairé ou connecté au premier équipement peut réaliser l'algorithme visant à extraire le numéro de la plaque par exemple à partir du calculateur K₂. Selon un autre exemple, le serveur SERV₁ réalise cette étape d'extraction du numéro de la plaque de la voiture garée à proximité de la scène lors du dépôt sauvage.

La détection d'un véhicule et du positionnement de la plaque d'immatriculation peut avantageusement être utilisée pour flouter ladite plaque d'immatriculation lorsque les images sont extraites du premier flux vidéo FL₁ pour être transmises soit à un autre calculateur du premier équipement 10, soit à un second calculateur K₂ d'un second équipement agencé sur le site de la zone d'intérêt Zᵢ tel qu'un équipement connecté au premier équipement 10. Selon un autre exemple, la zone des plaques est floutée lorsque les images sont transmises au premier serveur distant SERV₁.

Selon un mode de réalisation, le floutage est réalisé lors de la réception de la première série d'images S₁ et/ou de la seconde série d'images S₂. Par l'équipement qui reçoit lesdites images, par exemple K₂ ou SERV₁.

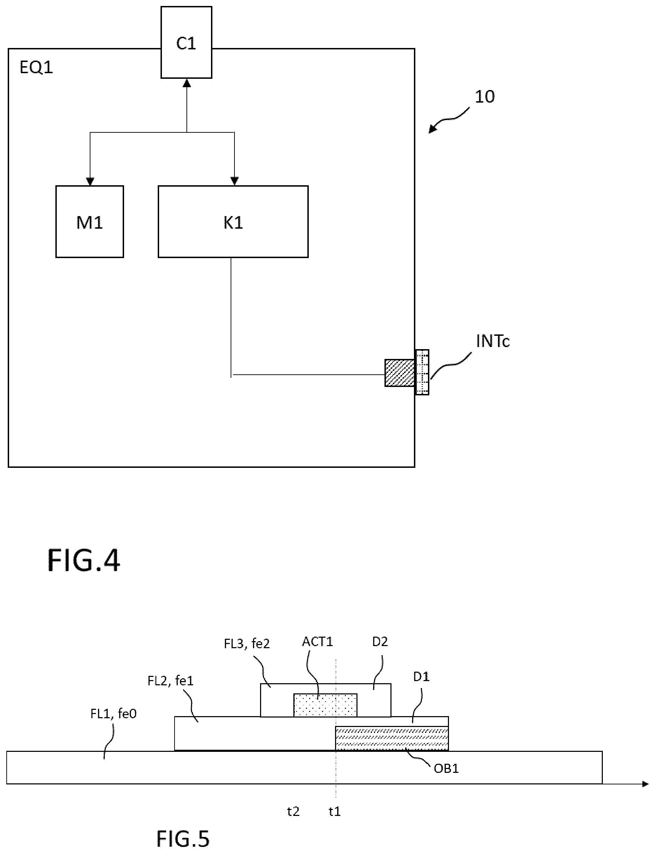

La figure 4 représente un exemple d'équipement 10 comportant une caméra C₁ configurée pour acquérir des images. Le flux vidéo acquis est enregistré dans une mémoire M₁ et le calculateur K₁ de l'équipement 10 permet de traiter le flux vidéo pour échantillonner le flux vidéo. Selon un mode de réalisation, le calculateur K₁ ou un autre peut être configuré de sorte à segmenter le flux vidéo. Selon un mode de réalisation, le calculateur K₁ ou un autre peut être configuré pour réaliser des prétraitements numériques sur les images, tels que des compressions d'image, de la correction d'image, l'application de filtre ou encore le traitement du bruit.

Selon un mode de réalisation, l'équipement 10 comprend une interface de communication INT_{C} permettant de transférer des informations telles que des images à un serveur distant. L'interface peut être une interface 3G, 4G, Wifi, Bluetooth ou toute autre type d'interface de communication.

La figure 5 représente différentes représentations des flux vidéo notamment du flux vidéo acquis FL₁ à la fréquence fe0. La fréquence du flux vidéo est généralement comprise entre 1 image/seconde et 30 images/seconde, noté respectivement 1i/s et 30i/s, toutefois d'autres périodes peuvent être utilisées selon l'équipement utilisé. Selon un mode de réalisation, un échantillonnage à l'acquisition est réalisé afin de réduire le poids des vidéos enregistrées, par exemple pour obtenir une fréquence d'échantillonnage comprise entre 1 image par minute et 1 image par seconde, noté respectivement 1i/s et 1i/m.

La figure 5 représente le second flux vidéo FL₂ correspondant à une série d'images extraites du premier flux vidéo FL₁ échantillonné avec un nombre d'images par seconde prédéfini. La fréquence d'échantillonnage Fe₁ permettant d'extraire des images du premier flux FL₁ pour produire le troisième flux FL₂ est notée Fe₁. Ce nombre d'images extrait peut être compris entre 1 image par seconde et 1 image par heure. Selon d'autres exemples, d'autres échantillonnages peuvent être choisis. Le second flux vidéo peut correspondre à un flux continu extrait en temps réel du premier flux vidéo FL₁ ou il peut correspondre à des segments temporels du premier flux vidéo FL₁.

La figure 5 représente également le troisième flux vidéo FL₃ correspondant à une série d'images extraites du premier flux vidéo FL₁ échantillonné avec un nombre d'images par seconde prédéfini. La fréquence d'échantillonnage permettant d'extraire des images du premier flux FL₁ pour produire le troisième flux FL₃ est notée Fe₂. Ce nombre d'images extrait peut être compris entre 1 image par seconde et 30 images par seconde. Selon d'autres exemples, d'autres échantillonnages peuvent être choisis.

La figure 5 permet de représenter les fenêtres temporelles D₁ et D₂ d'analyse du flux d'images FL₁ selon les dates de détection d'un dépôt OB₁, date t₁, et/ou d'une activité caractéristique, date t₂.

Ces fenêtres temporelles D₁, D₂ permettent de générer une fenêtre d'analyse du premier flux vidéo FL₁ avec un autre échantillonnage adapté pour extraire soit des images à analyser une portion d'une vidéo à transmettre au second serveur SERV₂.

La première fenêtre temporelle D₁ est par exemple centrée sur la date t₁ de détection d'un dépôt OB₁. Cette fenêtre temporelle permet d'analyser une portion vidéo dans laquelle sont extraites des images du premier flux avec une seconde fréquence d'échantillonnage fe₂. Lors de la détection d'une activité caractéristique ACT₁, une seconde fenêtre temporelle D₂ est définie par exemple vis-à-vis des dates t₁ et t₂ de sorte à extraire une portion vidéo du premier flux vidéo FL₁ à envoyer au second serveur SERV₂.

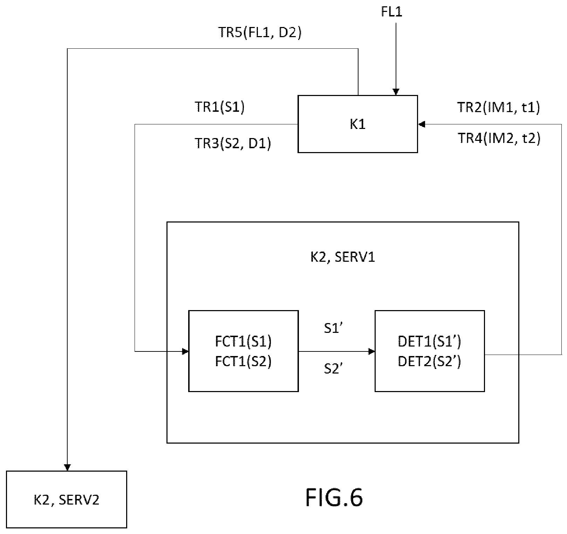

La figure 6 représente une illustration des flux de données entre chaque équipement du système, ici matérialisé par les calculateurs. Il est entendu que chaque calculateur ou serveur est associé à des composants électroniques permettant de les alimenter, des mémoires pour enregistrer des données et des interfaces pour transmettre certaines données.

Ici les transmissions TR₁ et TR₃ permettent de transférer des séries d'images S₁, S₂ issues d'un échantillonnage du premier flux vidéo FL₁. La seconde série d'images S₂ est comprise dans une fenêtre temporelle D₁.

Les transmissions TR₂ et TR₄ permettent de transférer des données associées aux détections de dépôts OB₁ et d'activité caractéristique ACT₁ telles que les images IM₁, IM₂ et d'au moins une date t₁, t₂.

La transmission TR₅ permet d'émettre la portion d'un intérêt du premier flux vidéo FL₁ compris dans un second intervalle de temps D₂. Au sein de laquelle les détections de dépôts OB₁ et d'activité caractéristique ACT₁ ont été réalisées.

La figure 6 permet de représenter au sein du calculateur K₂ ou du premier serveur SERV₁, les algorithmes de floutage réalisées par la fonction FCT₁ des deux séries d'images S₁ et S2. Les notations S₁' et S₂' de la figure 6 correspondent aux images floutées ou du moins des images comportant une portion floutée de l'image. Le reste de la description a été décrite au regard des notations S₁ et S₂ qui peuvent être considérées comme des images floutées ou non.

La figure 6 représente également les fonctions de détections DET₁ ou DET₂, respectivement d'un dépôt OB₁ et d'une activité caractéristique ACT₁ précédemment décrites.

Comme indiqué précédemment, le dépôt OB₁ peut concerner, alternativement à un dépôt sauvage de déchets, un abandon d'objet tel qu'un bagage ou un colis dans un lieu public.

## Revendications

1. Procédé mis en œuvre par ordinateur de détection de séquences vidéo d'intérêt d'une zone sous surveillance comportant :
▪ Acquisition (ACQ₁) d'un premier flux vidéo (FL₁) par au moins une caméra (10) agencée pour capturer des images d'une zone d'intérêt (Zi) ;
▪ Enregistrement (ENR₁) du premier flux vidéo (FL₁) dans une mémoire (M₁), lesdits enregistrements correspondant à des vidéos enregistrées d'une durée prédéfinie ;
▪ Première extraction (EXT₁) d'une première série d'images (S₁) du premier flux vidéo (FL₁) définissant un second flux d'images (FL₂) acquis selon une première fréquence d'échantillonnage (Fe₁) par un premier calculateur (K₁) d'un premier équipement (10) ;
▪ Transmission (TR₁) du second flux d'images (FL₂) à un second calculateur (K₂, SERV₁) ;
▪ Détection d'un (DET₁) dépôt (OB₁) par la mise en œuvre d'un premier algorithme de détection de changements dans les images appliqué au second flux d'image (FL₂), ledit premier algorithme étant configuré pour déterminer une première position (POS₁) d'un nouvel élément (20) dans ladite image, appelé premier élément (20), persistant pendant une durée minimale dans au moins une image du second flux d'image (FL₂) ;
▪ Transmission (TR₂) au premier équipement (10) d'une première donnée de détection (BIN₁) relative à la présence d'un premier élément (20) dans l'image du second flux d'images (FL₂), d'un identifiant d'une première image (IM₁) associée à une première date (t₁), ladite première image (IM₁) comportant le premier élément (20) détecté ;
▪ Seconde extraction (EXT₂) par un composant du premier équipement (10) d'une seconde série d'images (S₂) du premier flux vidéo (FL₁) acquis selon une seconde fréquence d'échantillonnage (Fe₂) sur une première fenêtre temporelle (D₁) comportant la première date (t₁), la seconde série d'images (S₂) définissant un troisième flux vidéo (FL₃) ;
▪ Transmission (TR₃) au second calculateur (K₂, SERV₁) ou à un troisième calculateur (K₂, SERV₁) de la seconde série d'images (S₂) ;
▪ Détection (DET₂) d'une présence d'un être humain (ACT₁) au sein d'au moins une image (IM₂) de la seconde série d'images (S₂) par la mise en œuvre d'une première fonction apprenante (FA₁) dans une zone prédéfinie autour de la première position (POS₁) de chaque image traitée de la seconde série d'images (S₂) ;
▪ Transmission (TR₄) au premier équipement (10) d'une seconde donnée de détection (BIN₂) relative à la présence d'un être humain (ACT₁) dans au moins une image (IM₂) de la seconde série d'images (S₂), d'un identifiant d'une seconde image (IM₂) associée à une seconde date (t₂), ladite seconde image (IM₂) comportant une présence d'un être humain (ACT₁) détectée ;
▪ Transmission (TR₅) d'un extrait du premier flux vidéo (FL₁), une seconde fenêtre temporelle (D₂) correspondant à la durée de l'extrait comportant la première date (t₁) et la seconde date (t₂) vers un second serveur distant (SERV₂), le procédé étant tel que la seconde fréquence d'échantillonnage (Fe₂) est strictement supérieure à la première fréquence d'échantillonnage (Fe₁), ladite première fenêtre temporelle (D₁) comportant une portion du flux d'images précédent la première date (t₁).

2. Procédé selon la revendication 1 **caractérisé en ce que** le procédé comporte :
▪ Floutage d'au moins une portion de chaque image de la première série d'images (S₁) par la mise en œuvre d'une fonction de floutage (FCT₁), ledit floutage étant réalisé par le second calculateur (K₂, SERV₁) après la transmission (TR₁) du second flux d'images (FL₂) audit second calculateur (K₂, SERV₁) ;
▪ Floutage d'au moins une portion d'image de chaque image de la seconde série d'images (S₂) par la mise en œuvre d'une fonction de floutage (FCT₁), ledit floutage étant réalisé par le second ou le troisième calculateur (K₂, SERV₁) après la transmission (TR₃) du second flux d'images (FL₂) audit second calculateur (K₂, SERV₁).

3. Procédé selon la revendication 2 **caractérisé en ce que** le second calculateur (K₂, SERV₁) est un calculateur d'un serveur distant (SERV₁), ledit serveur distant (SERV₁) comportant une première fonction de floutage (FCT₁) pour flouter automatiquement une seconde zone d'intérêt (Z₂) de chaque image reçue du flux d'images reçues (FL₂), ladite première fonction logicielle (FCT₁) comportant la mise en œuvre d'un modèle d'apprentissage machine (MAM) configuré pour détecter et classifier les plaques d'immatriculation et les visages, ladite configuration comportant un modèle d'apprentissage machine (MAM) appris à partir d'un ensemble de données d'entrainement, ladite première fonction logicielle (FCT₁) comportant en outre un algorithme de floutage de ladite seconde zone d'intérêt (Z₂) détectée.

4. Procédé selon la revendication 1 **caractérisé en ce que** la détection (DET₁) d'un dépôt (OB₁) comprend :
▪ Une détection d'un changement entre au moins deux images consécutives du second flux d'images (FL₂), ledit changement caractérisant un premier élément (20) présent dans l'image ;
▪ Une détection de la présence du premier élément (20) au sein d'une pluralité d'images du second flux d'images (FL₂), lesdites images étant considérées précédemment et/ou successivement à l'image au sein de laquelle un changement a été détecté ;
▪ Une extraction de la position dudit premier élément (20) au sein de l'image.

5. Procédé selon la revendication 4 **caractérisé en ce que** la détection de la présence du premier élément (20) au sein d'une pluralité d'images du second flux d'images est réalisé en effectuant une première moyenne de valeurs de pixels considérés dans chaque image d'un premier sous-ensemble d'images précédent l'image au sein de laquelle un changement a été détecté et en effectuant une seconde moyenne de valeurs de pixels considérés dans chaque image d'un second sous ensemble d'images succédant l'image au sein de laquelle un changement a été détecté, l'écart entre la première et la seconde moyenne permettant de déduire la présence d'un dépôt (OB₁).

6. Procédé selon la revendication 1 **caractérisé en ce que** la détection d'un dépôt (OB₁) comprend au moins une comparaison de propriétés caractéristiques d'un groupement de pixels entre au moins deux images de la première série d'images (S₁).

7. Procédé selon la revendication 1 **caractérisé en ce que** lors d'une détection d'un premier élément (20), le premier calculateur (K₁, SERV₁) comprend :
▪ Une génération d'une première donnée de détection (BIN₁) relative à la présence d'un premier élément (20) dans l'image,
▪ Une identification de la première image (IM₁) comportant le premier élément (20) détecté dans l'image soit par un identifiant d'image (ID_IM₁), soit par une date (t₁) décrite par un code temporel dans une fenêtre temporelle prédéfinie ;
▪ la génération d'au moins une première position (POS₁) dudit premier élément (20) dans l'image.

8. Procédé selon la revendication 1 **caractérisé en ce que** la première date (t₁) correspond à un code temporel d'une image dans le premier flux d'image (FL₁), c'est-à-dire à celle d'une image échantillonnée à la première fréquence (Fe₁).

9. Procédé selon la revendication 1 **caractérisé en ce que** la détection (DET₁) du dépôt (OB₁) comprend l'identification d'un intervalle temporel compris entre deux dates (t_{1A}, t_{1B}) entre lesquelles le dépôt (OB₁) est détecté et **en ce que** la détection d'une présence humaine (DET₂) comprend l'identification d'un intervalle temporelle compris entre deux dates (t_{2A}, t_{2B}) entre lesquelles la présence d'un être humain (ACT₁) est détectée.

10. Procédé selon la revendication 9 **caractérisé en ce que** la première fenêtre temporelle (D₁) de la seconde extraction (EXT₂) est définie par les deux dates de l'intervalle temporelle identifié lors de la détection (DET₁) du dépôt (OB₁).

11. Procédé selon la revendication 9 **caractérisé en ce que** la seconde fenêtre temporelle (D₂) de la seconde extraction (EXT₂) est définie par les deux dates de l'intervalle temporelle identifié lors de la détection (DET₁) du dépôt (OB₁).

12. Procédé selon la revendication 1, **caractérisé en ce que** la détection d'une présence humaine comprend la détection d'une activité caractéristique d'un être humain.

13. Procédé selon la revendication 12, **caractérisé en ce que** la détection d'une activité caractéristique comprend la mise en œuvre d'une première fonction apprenante (FA₁) réceptionnant en entrée des images du premier flux vidéo (FL₁) et mettant en œuvre un modèle d'apprentissage machine appris à partir d'un ensemble de données d'entrainement permettant de classifier des images d'un individu et classifier des mouvements desdits individus dans une portion donnée de chaque image traitée.

14. Procédé selon la revendication 1 ou 12, **caractérisé en ce que** la seconde date (t₂) correspond à une date d'une image (IM₂) échantillonnée et sélectionnée dans une seconde fenêtre temporelle (D₃) correspondant à la période pendant laquelle une présence humaine ou une activité caractéristique a été détectée.

15. Procédé selon la revendication 1 ou 12, **caractérisé en ce que** la seconde transmission (TR₂) comprend également la transmission d'au moins une première position (POS₁) dudit premier élément (20) détecté dans l'image (IM₁) et **en ce que** la quatrième transmission (TR₄) comprend également la transmission d'au moins une seconde position (POS₂) de ladite présence humaine ou ladite activité caractéristique (ACT₁) détectée dans l'image identifiée (IM₂).

16. Procédé selon la revendication 1, **caractérisé en ce que** la première transmission (TR₁) et la transmission (TR₃) sont réalisées vers le même calculateur (K₂, SERV1), le second calculateur et le troisième calculateur étant dans ce cas les mêmes calculateurs.

17. Equipement (10) destiné à être fixé à un mat, ledit équipement (10) comportant une caméra pour acquérir des images d'une zone d'intérêt et au moins un premier calculateur (K₁, K₂) et une mémoire (M₁) pour mettre en œuvre les étapes du procédé de l'une quelconque des revendications 1 à 16.

18. Système comportant un équipement (10) comportant une caméra pour acquérir des images d'une zone d'intérêt et au moins un premier calculateur (K₁) et une mémoire (M₁), ledit système comportant en outre un serveur distant (SERV₁) pour mettre en œuvre les étapes du procédé de l'une quelconque des revendications 1 à 16.

## Patentansprüche

1. Computergestütztes Verfahren zur Erkennung von Videosequenzen von Interesse eines überwachten Bereichs, aufweisend:
▪ Erfassen (ACQ₁) eines ersten Videostreams (FL₁) durch mindestens eine Kamera (10), die eingerichtet ist, um Bilder eines Bereichs von Interesse (Zi) aufzunehmen;
▪ Aufzeichnen (ENR₁) des ersten Videostreams (FL₁) in einem Speicher (M₁), wobei die Aufzeichnungen aufgezeichneten Videos einer vordefinierten Dauer entsprechen;
▪ erstes Extrahieren (EXT₁) einer ersten Bildserie (S₁) des ersten Videostreams (FL₁) zur Definition eines zweiten Bildstreams (FL₂), der gemäß einer ersten Abtastrate (Fe₁) von einem ersten Rechner (K₁) einer ersten Ausrüstung (10) erfasst wurde;
▪ Übertragen (TR₁) des zweiten Bildstreams (FL₂) an einen zweiten Rechner (K₂, SERV₁);
▪ Erkennen einer (DET₁) Ablagerung (OB₁) durch Umsetzung eines ersten Algorithmus zur Erkennung von Änderungen in den Bildern, der auf den zweiten Bildstream (FL₂) angewendet wird, wobei der erste Algorithmus ausgelegt ist, um eine erste Position (POS₁) eines neuen Elements (20) in dem Bild, bezeichnet als erstes Element (20), zu bestimmen, die für eine Mindestdauer in mindestens einem Bild des zweiten Bildstreams (FL₂) andauert;
▪ Übertragen (TR₂), an die erste Ausrüstung (10), einer ersten Erkennungsangabe (BIN₁) in Bezug auf das Vorhandensein eines ersten Elements (20) im Bild des zweiten Bildstreams (FL₂), einer Kennung eines ersten Bildes (IM₁) in Verbindung mit einem ersten Datum (t₁), wobei das erste Bild (IM₁) das erste erkannte Element (20) aufweist;
▪ zweites Extrahieren (EXT₂), durch eine Komponente der ersten Ausrüstung (10), einer zweiten Bildserie (S₂) des ersten Videostreams (FL₁), der gemäß einer zweiten Abtastrate (Fe₂) über ein erstes Zeitfenster (D₁) erfasst wurde, aufweisend das erste Datum (t₁), wobei die zweite Bildserie (S₂) einen dritten Videostream (FL₃) definiert;
▪ Übertragen (TR₃) der zweiten Bildreihe (S₂) an den zweiten Rechner (K₂, SERV₁) oder an einen dritten Rechner (K₂, SERV₁);
▪ Erkennen (DET₂) einer Anwesenheit eines Menschen (ACT₁) auf mindestens einem Bild (IM₂) der zweiten Bildserie (S₂) durch die Umsetzung einer ersten Lernfunktion (FA₁) in einem vordefinierten Bereich um die erste Position (POS₁) jedes verarbeiteten Bildes der zweiten Bildserie (S₂) herum;
▪ Übertragen (TR₄), an die erste Ausrüstung (10), einer zweiten Erkennungsangabe (BIN₂) in Bezug auf die Anwesenheit eines Menschen (ACT₁) in mindestens einem Bild (IM₂) der zweiten Bildserie (S₂), einer Kennung eines zweiten Bildes (IM₂) in Verbindung mit einem zweiten Datum (t₂), wobei das zweite Bild (IM₂) eine Anwesenheit eines erkannten Menschen (ACT₁) aufweist;
▪ Übertragen (TR₅) eines Auszugs aus dem ersten Videostream (FL₁), wobei ein zweites Zeitfenster (D₂) der Dauer des Auszugs mit dem ersten Datum (t₁) und dem zweiten Datum (t₂) entspricht, an einen zweiten entfernten Server (SERV₂), wobei das Verfahren derart ist, dass die zweite Abtastrate (Fe₂) strikt höher ist als die erste Abtastrate (Fe₁), wobei das erste Zeitfenster (D₁) einen Abschnitt des Bildstreams vor dem ersten Datum (t₁) aufweist.

2. Verfahren nach Anspruch 1, **dadurch gekennzeichnet, dass** das Verfahren aufweist:
▪ Unschärfen mindestens eines Abschnitts jedes Bildes der ersten Bildserie (S₁) durch die Umsetzung einer Unschärfungsfunktion (FCT₁), wobei das Unschärfen von dem zweiten Rechner (K₂, SERV₁) nach der Übertragung (TR₁) des zweiten Bildstreams (FL₂) an den zweiten Rechner (K₂, SERV₁) durchgeführt wird;
▪ Unschärfen mindestens eines Abschnitts jedes Bildes der zweiten Bildserie (S₂) durch die Umsetzung einer Unschärfungsfunktion (FCT₁), wobei das Unschärfen durch den zweiten oder dritten Rechner (K₂, SERV₁) nach der Übertragung (TR₃) des zweiten Bildstreams (FL₂) an den zweiten Rechner (K₂, SERV₁) durchgeführt wird.

3. Verfahren nach Anspruch 2, **dadurch gekennzeichnet, dass** der zweite Rechner (K₂, SERV₁) ein Rechner eines entfernten Servers (SERV₁) ist, wobei der entfernte Server (SERV₁) eine erste Unschärfungsfunktion (FCT₁) aufweist, um automatisch einen zweiten Bereich von Interesse (Z₂) jedes empfangenen Bildes des empfangenen Bildstreams (FL₂) zu unschärfen, wobei die erste Softwarefunktion (FCT₁) die Umsetzung eines maschinellen Lernmodells (MAM) aufweist, das ausgelegt ist, um Kennzeichen und Gesichter zu erkennen und zu klassifizieren, wobei die Konfiguration ein aus einem Trainingsdatensatz gelerntes maschinelles Lernmodell (MAM) aufweist, wobei die erste Softwarefunktion (FCT₁) ferner einen Unschärfungsalgorithmus des zweiten erkannten Bereichs von Interesse (Z₂) aufweist.

4. Verfahren nach Anspruch 1, **dadurch gekennzeichnet, dass** die Erkennung (DET₁) einer Ablagerung (OB₁) umfasst:
▪ eine Erkennung einer Änderung zwischen mindestens zwei aufeinanderfolgenden Bildern des zweiten Bildstreams (FL₂), wobei die Änderung ein erstes Element (20) charakterisiert, das im Bild vorhanden ist;
▪ eine Erkennung des Vorhandenseins des ersten Elements (20) innerhalb einer Vielzahl von Bildern des zweiten Bildstreams (FL₂), wobei die Bilder zuvor und/oder nacheinander anhand des Bildes betrachtet werden, in dem eine Änderung erkannt wurde;
▪ eine Extraktion der Position des ersten Elements (20) innerhalb des Bildes.

5. Verfahren nach Anspruch 4, **dadurch gekennzeichnet, dass** die Erkennung des Vorhandenseins des ersten Elements (20) innerhalb einer Vielzahl von Bildern des zweiten Bildstreams durch ein erstes Mitteln von Werten von Pixeln, die in jedem Bild einer ersten Untergruppe von Bildern berücksichtigt werden, die dem Bild vorangehen, in dem eine Änderung erkannt wurde, und durch ein zweites Mitteln von Werten von Pixeln, die in jedem Bild einer zweiten Untergruppe von Bildern berücksichtigt werden, die dem Bild folgen, in dem eine Änderung erkannt wurde, durchgeführt wird, wobei die Differenz zwischen dem ersten und dem zweiten Mittel gestattet, das Vorhandensein einer Ablagerung (OB₁) abzuleiten.

6. Verfahren nach Anspruch 1, **dadurch gekennzeichnet, dass** die Erkennung einer Ablagerung (OB₁) wenigstens einen Vergleich von charakteristischen Eigenschaften einer Pixelgruppe zwischen wenigstens zwei Bildern der ersten Bildserie (S₁) umfasst.

7. Verfahren nach Anspruch 1, **dadurch gekennzeichnet, dass** bei einer Erkennung eines ersten Elements (20) der erste Rechner (K₁, SERV₁) umfasst:
▪ eine Erzeugung einer ersten Erkennungsangabe (BIN₁) in Bezug auf das Vorhandensein eines ersten Elements (20) im Bild,
▪ eine Identifizierung des ersten Bildes (IM₁), das das erste Element (20) aufweist, das im Bild entweder durch eine Bildkennung (ID_IM₁) oder durch ein Datum (t₁) erkannt wird, das durch einen Zeitcode in einem vordefinierten Zeitfenster beschrieben wird;
▪ die Erzeugung wenigstens einer ersten Position (POS₁) des ersten Elements (20) im Bild.

8. Verfahren nach Anspruch 1, **dadurch gekennzeichnet, dass** das erste Datum (t₁) einem Zeitcode eines Bildes im ersten Bildstream (FL₁) entspricht, das heißt dem eines mit der ersten Frequenz (Fe₁) abgetasteten Bildes.

9. Verfahren nach Anspruch 1, **dadurch gekennzeichnet, dass** die Erkennung (DET₁) der Ablagerung (OB₁) die Identifizierung eines Zeitintervalls zwischen zwei Daten (t_{1A}, t_{1B}) umfasst, zwischen denen die Ablagerung (OB₁) erkannt wird, und dass die Erkennung einer menschlichen Anwesenheit (DET₂) die Identifizierung eines Zeitintervalls zwischen zwei Daten (t_{2A}, t_{2B}) umfasst, zwischen denen die Anwesenheit eines Menschen (ACT₁) erkannt wird.

10. Verfahren nach Anspruch 9, **dadurch gekennzeichnet, dass** das erste Zeitfenster (D₁) der zweiten Extraktion (EXT₂) durch die beiden Daten des bei der Erkennung (DET₁) der Ablagerung (OB₁) identifizierten Zeitintervalls definiert ist.

11. Verfahren nach Anspruch 9, **dadurch gekennzeichnet, dass** das zweite Zeitfenster (D₂) der zweiten Extraktion (EXT₂) durch die beiden Daten des bei der Erkennung (DET₁) der Ablagerung (OB₁) identifizierten Zeitintervalls definiert ist.

12. Verfahren nach Anspruch 1, **dadurch gekennzeichnet, dass** die Erkennung einer menschlichen Anwesenheit die Erkennung einer für einen Menschen charakteristischen Aktivität umfasst.

13. Verfahren nach Anspruch 12, **dadurch gekennzeichnet, dass** die Erkennung einer charakteristischen Aktivität die Umsetzung einer ersten Lernfunktion (FA₁) umfasst, die eingangs Bilder des ersten Videostreams (FL₁) empfängt und ein aus einem Trainingsdatensatz gelerntes maschinelles Lernmodell umsetzt, das es gestattet, Bilder einer Person zu klassifizieren und Bewegungen der Personen in einem bestimmten Abschnitt jedes verarbeiteten Bildes zu klassifizieren.

14. Verfahren nach Anspruch 1 oder 12, **dadurch gekennzeichnet, dass** das zweite Datum (t₂) einem Datum eines in einem zweiten Zeitfenster (D₃) abgetasteten und ausgewählten Bildes (IM₂) entspricht, das dem Zeitraum entspricht, in dem eine menschliche Anwesenheit oder eine charakteristische Aktivität erkannt wurde.

15. Verfahren nach Anspruch 1 oder 12, **dadurch gekennzeichnet, dass** die zweite Übertragung (TR₂) auch die Übertragung wenigstens einer ersten Position (POS₁) des in dem Bild (IM₁) erkannten ersten Elements (20) umfasst und dass die vierte Übertragung (TR₄) ebenfalls die Übertragung wenigstens einer zweiten Position (POS₂) der in dem identifizierten Bild (IM₂) erkannten menschlichen Anwesenheit oder charakteristischen Aktivität (ACT₁) umfasst.

16. Verfahren nach Anspruch 1, **dadurch gekennzeichnet, dass** die erste Übertragung (TR₁) und die Übertragung (TR₃) zu demselben Rechner (K₂, SERV1) durchgeführt werden, wobei der zweite Rechner und der dritte Rechner in diesem Fall die gleichen Rechner sind.

17. Ausrüstung (10), die zur Befestigung an einem Mast bestimmt ist, wobei die Ausrüstung (10) eine Kamera zum Erfassen von Bildern eines Bereichs von Interesse und wenigstens einen ersten Rechner (K₁, K₂) und einen Speicher (M₁) zur Umsetzung der Schritte des Verfahrens nach einem der Ansprüche 1 bis 16 aufweist.

18. System, das eine Ausrüstung (10) aufweist, die eine Kamera zum Erfassen von Bildern eines Bereichs von Interesse und wenigstens einen ersten Rechner (K₁) und einen Speicher (M₁) aufweist, wobei das System ferner einen entfernten Server (SERV₁) zur Umsetzung der Schritte des Verfahrens nach einem der Ansprüche 1 bis 16 aufweist.

## Claims

1. Computer-implemented method for detecting video sequences of interest of a zone under surveillance comprising:
▪ Acquiring (ACQ₁) a first video stream (FL₁) by at least one camera (10) arranged to capture images of a zone of interest (Zi);
▪ Recording (ENR₁) of the first video stream (FL₁) in a memory (M₁), said recordings corresponding to recorded videos of a predefined length;
▪ First extracting (EXT₁) of a first series of images (S₁) of the first video stream (FL₁) defining a second image stream (FL₂) acquired according to a first sampling frequency (Fe₁) by a first calculator (K₁) of a first piece of equipment (10);
▪ Transmitting (TR₁) the second series of images (FL₂) to a second calculator (K₂, SERV₁) ;
▪ Detecting of a (DET₁) deposit (OB₁) by the implementing of a first algorithm for detecting changes in the images applied to the second image stream (FL₂), said first algorithm being configured to determine a first position (POS₁) of a new element (20) in said image, called first element (20), persisting for a minimum duration in at least one image of the second image stream (FL₂);
▪ Transmitting (TR₂) to the first piece of equipment (10) of a first piece of detection data (BIN₁) relative to the presence of a first element (20) in the image of the second image stream (FL₂), of an identifier of a first image (IM₁) associated with a first date (t₁), said first image (IM₁) comprising the first element (20) detected;
▪ Second extracting (EXT₂) by a component of the first piece of equipment (10) of a second series of images (S₂) from the first video stream (FL₁) acquired according to a second sampling frequency (Fe₂) over a first time window (D₁) comprising the first date (t₁), the second series of images (S₂) defining a third video stream (FL₃);
▪ Transmitting (TR₃) to the second calculator (K₂, SERV₁) or to a third calculator (K₂, SERV₁) of the second series of images (S₂);
▪ Detecting (DET₂) a presence of a human being (ACT₁) within at least one image (IM₂) of the second series of images (S₂) by the implementing of a first learning function (FA₁) in a predefined zone around the first position (POS₁) of each processed image of the second series of images (S₂);
▪ Transmitting (TR₄) to the first piece of equipment (10) of a second piece of detection data (BIN₂) relative to the presence of a human being (ACT₁) in at least one image (IM₂) of the second series of images (S₂), of an identifier of a second image (IM₂) associated with a second date (t₂), said second image (IM₂) comprising a detected presence of a human being (ACT₁);
▪ Transmitting (TR₅) of an extract from the first video stream (FL₁), a second time window (D₂) corresponding to the duration of the extract comprising the first date (t₁) and the second date (t₂) to a second remote server (SERV₂), the method being such that the second sampling frequency (Fe₂) is strictly higher than the first sampling frequency (Fe₁), said first time window (D₁) comprising a portion of the stream of images preceding the first date (t₁).

2. Method according to claim 1 **characterized in that** the method comprises:
▪ Blurring of at least one portion of each image of the first series of images (S₁) by the implementing of a blurring function (FCT₁), said blurring being carried out by the second calculator (K₂, SERV₁) after the transmitting (TR₁) of the second image stream (FL₂) to said second calculator (K₂, SERV₁);
▪ Blurring of at least one image portion of each image of the second series of images (S₂) by the implementing of a blurring function (FCT₁), said blurring being carried out by the second or the third calculator (K₂, SERV₁) after the transmitting (TR₃) of the second image stream (FL₂) to said second calculator (K₂, SERV₁).

3. Method according to claim 2 **characterized in that** the second calculator (K₂, SERV₁) is a calculator of a remote server (SERV₁), said remote server (SERV₁) comprising a first blurring function (FCT₁) to automatically blur a second zone of interest (Z₂) of each image received of the image stream received (FL₂), said first software function (FCT₁) comprising the implementing of a machine learning model (MLM) configured to detect and classify the registration plates and the faces, said configuration comprising a machine learning model (MLM) learned from a set of training data, said first software function (FCT₁) further comprising a blurring algorithm of said second detected zone of interest (Z₂).

4. Method according to claim 1 **characterized in that** the detecting (DET₁) of a deposit (OB₁) comprises:
▪ Detecting of a change between at least two consecutive images of the second image stream (FL₂), said change characterizing a first element (20) present in the image;
▪ Detecting the presence of the first element (20) within a plurality of images of the second image stream (FL₂), said images being considered previously and/or successively to the image within which a change has been detected;
▪ Extracting the position of said first element (20) within the image.

5. Method according to claim 4 **characterized in that** the detecting of the presence of the first element (20) within a plurality of images of the second image stream is carried out by taking a first average of values of pixels considered in each image of a first subset of images preceding the image within which a change has been detected and by taking a second average of the values of pixels considered in each image of the second subset of images succeeding the image within which a change has been detected, the difference between the first and the second average making it possible to deduce the presence of a deposit (OB₁).

6. Method according to claim 1 **characterized in that** the detecting of a deposit (OB₁) comprises at least one comparison of properties characteristic of a group of pixels between at least two images of the first series of images (S₁).

7. Method according to claim 1 **characterized in that** during a detection of a first element (20), the first calculator (K₁, SERV₁) comprises:
▪ Generating a first piece of detection data (BIN₁) relative to the presence of a first element (20) in the image,
▪ Identifying a first image (IM₁) comprising the first element (20) detected in the image either by an image identifier (ID_IM₁), or by a date (t₁) described by a time code in a predefined time window;
▪ generating at least one first position (POS₁) of said first element (20) in the image.

8. Method according to claim 1 **characterized in that** the first date (t₁) corresponds to a time code of an image in the first image stream (FL₁), i.e. to that of animage sampled at the first frequency (Fe₁).

9. Method according to claim 1 **characterized in that** the detecting (DET₁) of the deposit (OB₁) comprises the identifying of a time interval between two dates (t_{1A}, t_{1B}) between which the deposit (OB₁) is detected and **in that** the detecting of a human presence (DET₂) comprises the identifying of a time interval between two dates (t_{2A}, t_{2B}) between which the presence of a human being (ACT₁) is detected.

10. Method according to claim 9 **characterized in that** the first time window (D₁) of the second extraction (EXT₂) is defined by the two dates of the time interval identified during the detecting (DET₁) of the deposit (OB₁).

11. Method according to claim 9 **characterized in that** the second time window (D₂) of the second extraction (EXT₂) is defined by the two dates of the time interval identified during the detecting (DET₁) of the deposit (OB₁).

12. Method according to claim 1, **characterized in that** the detecting of a human presence comprises the detecting of an activity characteristic of a human being.

13. Method according to claim 12, **characterized in that** the detecting of a characteristic activity comprises the implementing of a first learning function (FA₁) receiving as input images from the first video stream (FL₁) and implementing a machine learning model learned from a set of training data making it possible to classify images of an individual and classify movements of said individuals in a given portion of each processed image.

14. Method according to claim 1 or 12, **characterized in that** the second date (t₂) corresponds to date of an image (IM₂) sampled and selected in a second time window (D₃) corresponding to the period during which a human presence or a characteristic activity has been detected.

15. Method according to claim 1 or 12, **characterized in that** the second transmitting (TR₂) also comprises the transmitting of at least one first position (POS₁) of said first element (20) detected in the image (IM₁) and **in that** the fourth transmitting (TR₄) also comprises the transmitting of at least one second position (POS₂) of said human presence or said characteristic activity (ACT₁) detected in the identified image (IM₂).

16. Method according to claim 1, **characterized in that** the first transmitting (TR₁) and the transmitting (TR₃) are carried out towards the same calculator (K₂, SERV1), the second calculator and the third calculator being in this case the same calculators.

17. Piece of equipment (10) intended to be fastened to a mast, said piece of equipment (10) comprising a camera to acquire images of a zone of interest and at least one first calculator (K₁, K₂) and a memory (M₁) for implementing the steps of the method of any of claims 1 to 16.

18. System comprising a piece of equipment (10) comprising a camera for acquiring images of a zone of interest and at least one first calculator (K₁) and a memory (M₁), said system further comprising a remote server (SERV₁) for implementing the steps of the method of any of claims 1 to 16.
